# EUROPEAN PATENT SPECIFICATION

(11) **EP 2 701 964 B1**
(45) Date of publication and mention of the grant of the patent: **21.01.2015**
(21) Application number: 12720567.2
(22) Date of filing: 23.04.2012
(51) Int. Cl.: B62D 7/04

(54) **STEERING UNIT FOR VEHICLE WHEELS**
LENKEINHEIT FÜR FAHRZEUGRÄDER
UNITE DE DIRECTION POUR DES ROUES DE VEHICULE

(30) Priority: 29.04.2011 IT MO20110094
(43) Date of publication of application: 05.03.2014
(73) Proprietor: Borghi, Ivan, 41030 Bomporto (MO) Frazione Villavara (IT)
(72) Inventor: Borghi, Ivan, 41030 Bomporto (MO) Frazione Villavara (IT)
(74) Representative: Brunacci, Marco
(86) International application number: PCT/IB2012/000133
(87) International publication number: WO 2012/146959

(56) References cited:
- EP-A2- 1 186 513
- EP-A2- 1 775 196
- GB-A- 774 020
- US-A- 5 253 726

## Description

### Technical Field

The present invention relates to a steering unit for vehicle wheels.

### Background Art

Steering units are known for vehicle wheels from EP 1775196, EP 2006187 and MO2010A000143, registered in the name of the applicant itself.

More in particular, EP 1775196 describes a steering unit having an axle which supports in rotation each wheel or wheel assembly of a vehicle steering around the same rotation axis.

The steering unit described by EP 1775196 also has a steering element associated with the axle and connectable to a vehicle.

The steering element is mobile in rotation around a vertical axis, so as to also bring in rotation the corresponding axle and is kinematically connected to an electric motor by means of a reduction gear unit.

The transmission of the movement from the electric motor to the steering element which supports the axle therefore occurs by means of a plurality of gear wheels which engage with one another.

The steering unit described by EP 1775196 does however have drawbacks.

More in particular, because the electric motors generally have a high number of revolutions, the gear wheels that transfer the movement to the steering element must be suitably sized in order to achieve the required reduction ratio. It follows that the gear wheels that transfer the movement from the electric motor to the axle which supports the vehicle wheels can have considerably large diameters and such, therefore, as to have fairly large overall dimensions in a crossways direction to the steering axis.

Furthermore, the use of an electric motor generally results in a high production cost and, therefore high costs for the end user.

EP 2006187 on the other hand describes a steering unit wherein the steering wheels, associated with relative support elements (stub axles) mobile in rotation around respective axes, are mechanically linked together.

More in particular, the steering wheels are mechanically connected together by means of the rod of a double-acting hydraulic cylinder, the movement of which is controlled by a relative hydraulic circuit.

The translation of the rod, controlled by the rotation of the steering wheel of the relevant vehicle operatively connected to the above-mentioned hydraulic circuit, therefore causes the rotation of the support elements of the wheels around the relative axes.

EP 2006187 also has a number of drawbacks however.

In fact, the steering unit described by EP 2006187 is not very precise and has higher response times compared to those of an electric motor, which affect the response reaction of the relative vehicle.

Furthermore, the steering unit described by EP 2006187 is considerably complex from a construction viewpoint, with consequent increase in production costs.

Finally, the steering unit described by EP 2006187 is considerably cumbersome and, therefore, not very suitable for use in vehicles where there is little room and which therefore require a high degree of compactness.

MO2010A000143 describes a variation of the steering unit referred to in EP 2006187.

More in particular, the steering unit forming the subject of MO2010A000143 contemplates the steering wheels of the vehicle being linked together by means of a worm screw, which is driven in rotation by means of an electric motor. This steering unit also has limits however, due in particular to its high structural complexity. In fact, the high number of elements used in this construction solution and the realisation of the relative kinematic connections required to make the transfer of the rotation of the electric motor shaft to the worm screw imply high complexity both in the construction stage and in the assembly stage and, therefore, a high final cost.

Furthermore, the steering unit described by MO2010A000143 is considerably cumbersome and, therefore, not very suitable for use in vehicles where there is little room and which therefore require a high degree of compactness. EP 1 186 513 discloses pre-amble of claim 1.

### Description of the Invention

The main aim of the present invention is to provide a steering unit for vehicle wheels which is simpler, from a construction viewpoint, than the known steering units.

Another object of the present invention is to provide a steering unit which has reduced overall dimensions, in particular in a crossways direction to the steering axis, with respect to the known steering units.

Another object of the present invention is to provide a steering unit for vehicle wheels which allows to overcome the mentioned drawbacks of the state of the art within the ambit of a simple, rational, easy and effective to use as well as low cost solution.

The above objects are achieved by the present steering unit for vehicle wheels, according to claim 1.

### Brief Description of the Drawings

Other characteristics and advantages of the present invention will become more evident from the description of a preferred, but not sole, embodiment of a steering unit for vehicle wheels, illustrated purely as an example but not limited to the annexed drawings in which:
Figure 1 is a front elevation view of a steering unit according to the invention;
Figure 2 is a side elevation view of the steering unit of figure 1;
Figure 3 is a plan view from above of the steering unit of figure 1;
Figure 4 is an exploded schematic representation of a detail of the steering unit of figure 1.

### Embodiments of the Invention

With particular reference to such figures, globally indicated by 1 is a steering unit for vehicle wheels.

The unit 1 comprises a bearing frame 2, associable with a vehicle not shown in the illustration such as, e.g., an operating machine, a fork-lift truck, a tractor and/or the like.

The unit 1 then comprises at least one steering element 3, supported in rotation by the frame 2 around a substantially vertical steering axis 4, and at least one axle 5 connectable to the wheels 6 of the vehicle and supported in rotation by the steering element 3 around the steering axis 4.

More in particular, between the frame 2, fixed, and the steering element 3 a number of bearings 7 are placed, suited to allow the rotation of the steering element itself with respect to the frame 2 around the steering axis 4.

According to the invention, the unit 1 comprises a steering device 8 having at least one revolving element 9, associated integral with the steering element 3 and therefore moving in rotation around the steering axis 4, and at least one thrust element 10, placed between the revolving element 9 and the frame 2 and fitted sliding over the revolving element itself. The thrust element 10 is mobile in translation with respect to the revolving element 9 along a direction of translation substantially parallel to the steering axis 4.

According to the invention, furthermore, one between the thrust element 10 and the revolving element 9 comprises at least one groove 12 with a substantially helical extension and the other between the revolving element 9 and the thrust element 10 comprises at least one pin 13 which is fitted inside the groove 12; the sliding of the thrust element 10 with respect to the revolving element 9 causes the rotation of the latter by the effect of the reciprocal engagement of the pin 13 with the groove 12.

Advantageously, the revolving element 9 is defined in a single body piece with the steering element 3.

In the preferred embodiment shown in the illustrations, the revolving element 9 has a substantially round shape and the thrust element 10, fitted on the revolving element itself, has a substantially toroidal section. The revolving element 9 and the thrust element 10 are therefore arranged coaxially the one to the other and their axes substantially coincide with the steering axis 4.

More in detail, the frame 2 comprises a lower plate 2a, from which extends a cylindrical portion 2b which is hollow inside, and a cover 2c arranged on the opposite side of the lower plate 2a with respect to the cylindrical portion 2b and suited to close the latter at the top. The cylindrical portion 2b is fixed to the lower plate 2a and to the cover 2c by means of a plurality of fastening elements 14, preferably of the threaded type.

In the embodiment shown in the illustrations, the above-mentioned bearings 7 are positioned between the lower plate 2a and the revolving element 9 and between the cover 2c and the revolving element itself.

The revolving element 9 is arranged inside the cylindrical portion 2b.

The thrust element 10 is then positioned inside the volume delimited laterally by the revolving element 9 and by the cylindrical portion 2b, below by the lower plate 2a and above by the cover 2c. The lower plate 2a and the cover 2c define respective surfaces for stopping the stroke of the thrust element 10.

Suitably, the groove 12 is defined on the revolving element 9 and the thrust element 10 comprises the pin 13.

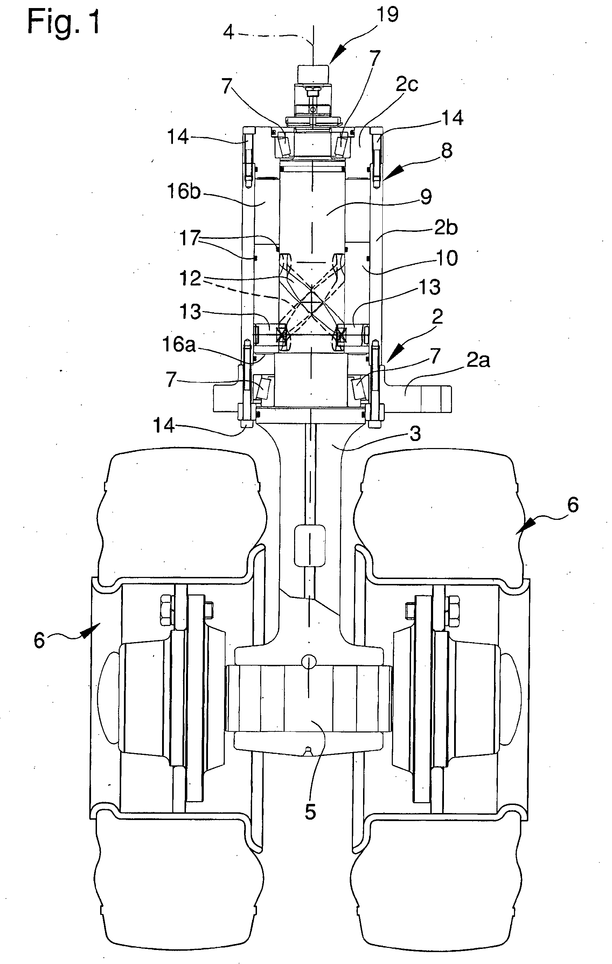

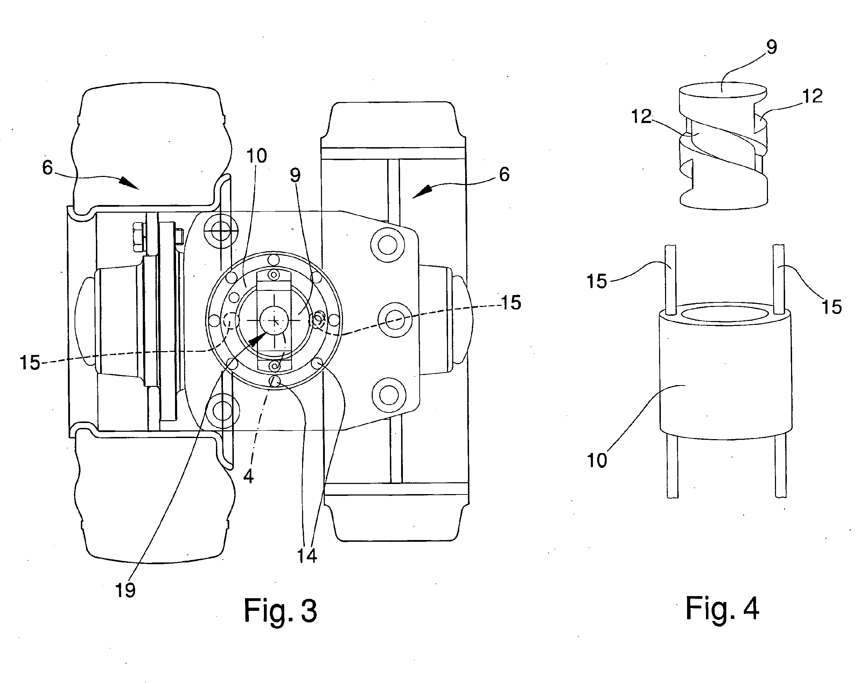

More in detail, as visible in the figures 1, 2 and 4, the steering device 8 comprises two grooves 12 and two pins 13, each of the pins 13 being suited to cooperate with a respective groove 12.

Advantageously, the steering device 8 comprises anti-rotation means suited to prevent the thrust element 10 from rotating around the steering axis 4 during its stroke along the direction of translation 11.

More in particular, the anti-rotation means comprise at least a guide element 15 arranged between the frame 2 and the revolving element 9 and passing through the thrust element 10. Suitably, the guide element 15 is integrally associated with the frame 2 and has an extremity fixed to the lower plate 2a and the opposite extremity fixed to the cover 2c.

Moreover, the guide element 15 substantially extends parallel to the steering axis 4.

In the preferred embodiment shown in the illustrations, the steering device 8 comprises two guide elements 15 arranged, the one to the other, on diametrically opposite sides with respect to the revolving element 9. The steering device 8 comprises translation operation means for operating in translation the thrust element 10.

In the preferred embodiment shown in the illustrations, the operation means are of the fluid-dynamic type.

More in detail, the frame 2, the revolving element 9 and the thrust element 10 delimit a first and a second thrust chambers 16a and 16b, arranged on opposite sides of the thrust element itself, and the operation means comprise at least a first delivery/discharge line of a working fluid, e.g. pressurized oil, communicating with the first chamber 16a and at least a second delivery/discharge line of the working fluid communicating with the second chamber 16b. The delivery/discharge lines are not shown in the enclosed illustrations.

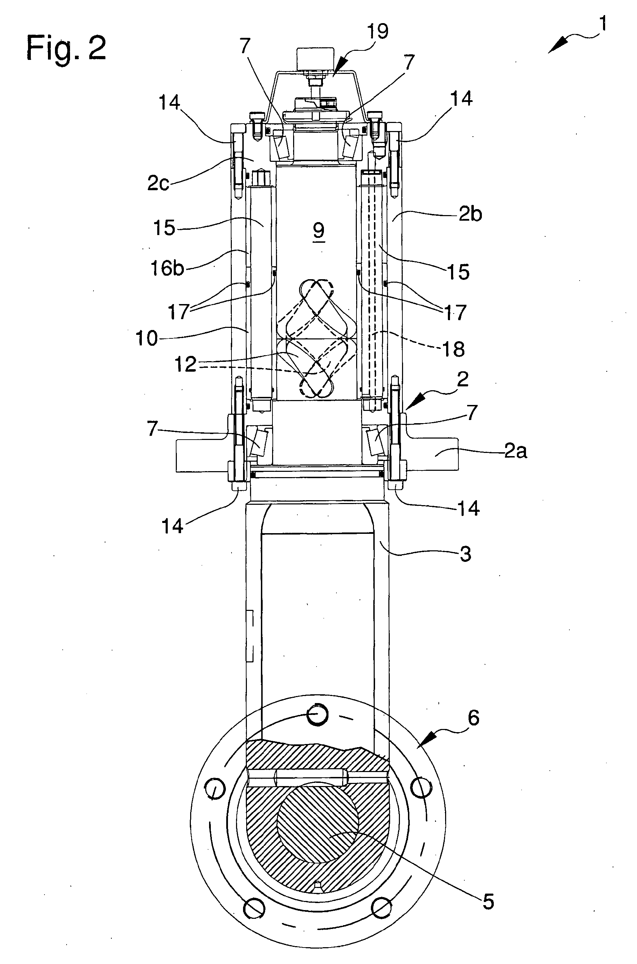

The first chamber 16a is delimited below by the lower plate 2a and above by the thrust element 10, while the second chamber 16b is delimited below by the thrust element 10 and above by the cover 2c. In the embodiment shown in the illustrations, and in particular in the figures 1 and 2, the thrust element 10 is represented in the lower end-of-stroke position, i.e., substantially resting on the lower plate 2a, in which the volume of the first chamber 16a is minimum. Suitably, the steering device 8 comprises seal means 17, made up e.g. of O-rings, positioned between the thrust element 10 and the cylindrical portion 2b, between the thrust element 10 and the revolving element 9 and between the thrust element 10 and the guide elements 15. The seal means 17 are suited to avoid the occurrence of working fluid overflowing from one thrust chamber to another.

At least one of the guide elements 15 is internally hollow and defines a pipe 18 for the flow of the working fluid communicating with one of the thrust chambers 16a, 16b and associable with the relevant delivery/discharge line.

Advantageously, the steering device 8 also comprises detection means 19 for detecting the excursion of the rotation of the revolving element 9.

More in detail, the detection means 19 are of the electronic type and are composed, e.g., of a potentiometer.

The operation of the steering unit shown in the illustrations is the following.

In the light of what has been described above, it is clear that the steering of the wheels of the vehicle is obtained by means of the translation of the thrust element 10.

More in particular, depending on the required direction of rotation, the working fluid must be sent into one of the two thrust chambers 16a, 16b.

For example, by sending the working fluid into the first chamber 16a, through the hollow guide element 15, a force is applied to the thrust element 10 which causes its movement towards the second chamber 16b, which is therefore reduced in volume.

The movement of the thrust element 10 towards the second chamber 16b also causes the sliding of the pins 13 along the relative grooves 12.

Because the thrust element 10 is restrained in its translation movement by the guide elements 15 and because the grooves 12 have a helical extension, it follows that the revolving element 9 is dragged in rotation around its axis, which coincides with the steering axis 4, by the movement of the thrust element 10. The linear translation movement of the thrust element 10 is thus transformed into the rotary movement of the revolving element 9 by means of the pin-groove coupling.

The rotation of the revolving element 9 is transferred to the steering element 3 and from this to the wheels 6 by means of the axle 5.

Vice versa, to invert the direction of rotation of the steering element 3 the working fluid must be sent inside the second chamber 16b and that contained in the first chamber 16a must be discharged.

This way, the thrust element 10 moves in a direction contrary to the previous one and, consequently, the revolving element 9 is also driven in rotation in a direction opposite to the previous one.

It has in fact been ascertained how the described invention achieves the proposed objects and in particular the fact is underlined that the steering unit is considerably simpler, from a construction viewpoint, with respect to known steering units.

Furthermore, the described kinematic coupling which transforms the linear movement of the thrust element into the rotation movement of the revolving element coaxial and integral with the steering element allows reducing to the utmost the overall dimensions in a crossways direction to the steering axis. Furthermore, the steering unit according to the invention allows moving the steering element without the aid of an electric motor.

## Claims

1. Steering unit (1) for vehicle wheels, comprising:
- a bearing frame (2), associable with a vehicle;
- at least a steering element (3) supported in rotation by said frame (2) around a substantially vertical steering axis (4);
- at least an axle (5) connectable to the wheels (6) of said vehicle and supported in rotation around said steering axis (4) by said steering element (3);
- at least a steering device (8) having at least a revolving element (9) associated integrally with said steering element (3) and at least a thrust element (10) placed between said revolving element (9) and said frame (2) and fitted sliding on the revolving element itself in a direction substantially parallel to said steering axis (4), wherein:
- at least one between said revolving element (9) and said thrust element (10) comprises at least a groove (12) having a substantially helical extension and the other between said thrust element (10) and said revolving element (9) comprises at least a pin (13) which is fitted inside said groove (12), the sliding of said thrust element (10) with respect to said revolving element (9) causing the rotation of the latter by the effect of the reciprocal engagement of said pin (13) with said groove (12);
- said steering device (8) comprises operation means for operating in translation said thrust element (10) which are of the fluid-dynamic type;
- said frame (2), said revolving element (9) and said thrust element (10) delimit at least a first and a second thrust chamber (16a, 16b) arranged on opposite sides with respect to the thrust element itself, said operation means comprising at least a first delivery/discharge line of a working fluid communicating with said first thrust chamber (16a) and at least a second delivery/discharge line of the working fluid communicating with said second thrust chamber (16b); and
- said steering device (8) comprises anti-rotation means suited to prevent
said thrust element (10) from rotating around said steering axis (4);
**characterized by** the fact that said anti-rotation means comprise at least one guide element (15) placed between said frame (2) and said revolving element (9), said guide element (15) passing through said thrust element (10), and by the fact that said at least one guide element (15) is substantially hollow and defines at least a pipe (18) for the flow of said working fluid communicating with one of said thrust chambers (16a, 16b) and connectable to the relevant delivery/discharge line.

2. Steering unit (1) according to claim 1, **characterized by** the fact that said revolving element (9) is defined in a single body piece with said steering element (3).

3. Steering unit (1) according to claim 1 or 2, **characterized by** the fact that said revolving element (9) has a substantially round section and that said thrust element (10) has a substantially toroidal section, said revolving element (9) and said thrust element (10) being coaxial to said steering axis (4).

4. Steering unit (1) according to one or more of the preceding claims, **characterized by** the fact that said at least one groove (12) is defined on said revolving element (9) and that said at least one pin (13) is defined on said thrust element (10).

5. Steering unit (1) according to one or more of the preceding claims, **characterized by** the fact that said steering device (8) comprises at least two of said grooves (12) and at least two of said pins (13), each of said pins (13) being suited to cooperate with a respective groove (12).

6. Steering unit (1) according to one or more of the preceding claims, **characterized by** the fact that said guide element (15) is integrally associated with said frame (2) and extends substantially parallel to said steering axis (4).

7. Steering unit (1) according one or more of the preceding claims, **characterized by** the fact that said anti-rotation means comprise at least two of said guide elements (15) arranged on opposite sides of said revolving element (9).

## Patentansprüche

1. Lenkeinheit (1) für Fahrzeugräder, umfassend:
- einen Lagerrahmen (2), der mit einem Fahrzeug verbindbar ist;
- mindestens ein Lenkelement (3), das um eine im Wesentlichen vertikale Lenkachse (4) drehbar von dem Rahmen (2) getragen wird;
- mindestens eine Achse (5), die mit den Rädern (6) des Fahrzeugs verbindbar ist und um die Lenkachse (4) drehbar von dem Lenkelement (3) getragen wird;
- mindestens eine Lenkvorrichtung (8), die mindestens ein Rotationselement (9) aufweist, das integral mit dem Lenkelement (3) verbunden ist und mindestens ein Verschiebungselement (10), das zwischen dem Rotationselement (9) und dem Rahmen (2) angeordnet und auf dem Rotationselement selbst in einer zu der Lenkachse (4) im Wesentlichen parallelen Richtung verschiebbar eingepasst ist, wobei:
- mindestens eines von dem Rotationselement (9) und dem Verschiebungselement (10) mindestens eine Nut (12) umfasst, die eine im Wesentlichen spiralförmige Erstreckung aufweist und das andere von dem Verschiebungselement (10) und dem Rotationselement (9) mindestens einen Bolzen (13) umfasst, der in die Nut (12) eingepasst ist, wobei das Verschieben des Verschiebungselements (10) mit Bezug auf das Rotationselement (9) die Rotation des letzteren durch den Effekt des gegenseitigen Eingriffs des Bolzens (13) mit der Nut (12) verursacht;
- die Lenkvorrichtung (8) Betätigungsmittel zum translatorischen Betätigen des Verschiebungselements (10) umfasst, die von dem fluid-dynamischen Typ sind;
- der Rahmen (2), das Rotationselement (9) und das Verschiebungselement (10) zumindest eine erste und eine zweite Verschiebungskammer (16a, 16b) begrenzen, die auf gegenüberliegenden Seiten mit Bezug auf das Verschiebungselement selbst angeordnet sind, wobei die Betätigungsmittel mindestens eine erste Zuführ-/Abführ-Leitung eines mit der ersten Verschiebungskammer (16a) in Verbindung stehenden Arbeitsmittels und mindestens eine zweite Zuführ-/Abführ-Leitung des mit der zweiten Verschiebungskammer (16b) in Verbindung stehenden Arbeitsmittels umfassen; und
- die Lenkvorrichtung (8) Anti-Rotationsmittel umfasst, die geeignet sind, um das Verschiebungselement (10) am Rotieren um die Lenkachse (4) zu hindern; **gekennzeichnet durch** die Tatsache, dass die Anti-Rotationsmittel mindestens ein Führungselement (15) umfassen, das zwischen dem Rahmen (2) und dem Rotationselement (9) angeordnet ist, wobei das Führungselement (15) das Verschiebungselement (10) durchläuft, und **durch** die Tatsache, dass das mindestens eine Führungselement (15) im Wesentlichen hohl ist und mindestens eine mit der relevanten Zuführ-/Abführ-Leitung verbindbare Leitung (18) zum Durchfluss des Arbeitsmittels definiert, das mit einer der Verschiebungskammern (16a, 16b) in Verbindung steht.

2. Lenkeinheit (1) nach Anspruch 1, **gekennzeichnet durch** die Tatsache, dass das Rotationselement (9) einteilig mit dem Lenkelement (3) ausgebildet ist.

3. Lenkeinheit (1) nach Anspruch 1 oder 2, **gekennzeichnet durch** die Tatsache, dass das Rotationselement (9) einen im Wesentlichen runden Abschnitt aufweist und das Verschiebungselement (10) einen im Wesentlichen ringförmigen Abschnitt aufweist, wobei das Rotationselement (9) und das Verschiebungselement (10) koaxial zu der Lenkachse (4) ausgerichtet sind.

4. Lenkeinheit (1) nach einem oder mehreren der vorherigen Ansprüche, **gekennzeichnet durch** die Tatsache, dass die mindestens eine Nut (12) auf dem Rotationselement (9) ausgebildet ist und dass der mindestens eine Bolzen (13) auf dem Verschiebungselement (10) ausgebildet ist.

5. Lenkeinheit (1) nach einem oder mehreren der vorherigen Ansprüche, **gekennzeichnet durch** die Tatsache, dass die Lenkvorrichtung (8) mindestens zwei der Nuten (12) und mindestens zwei der Bolzen (13) umfasst, wobei jeder der Bolzen (13) geeignet ist, um mit einer zugehörigen Nut (12) zusammenzuwirken.

6. Lenkeinheit (1) nach einem oder mehreren der vorherigen Ansprüche, **gekennzeichnet durch** die Tatsache, dass das Führungselement (15) integral mit dem Rahmen (2) verbunden ist und sich im Wesentlichen parallel zu der Lenkachse (4) erstreckt.

7. Lenkeinheit (1) nach einem oder mehreren der vorherigen Ansprüche, **gekennzeichnet durch** die Tatsache, dass die Anti-Rotationsmittel mindestens zwei der Führungselemente (15) umfassen, die auf gegenüberliegenden Seiten des Rotationselements (9) angeordnet sind.

## Revendications

1. Unité de direction (1) pour des roues de véhicule, comprenant :
- un corps de palier (2), pouvant être associé à un véhicule ;
- au moins un élément de direction (3) guidé en rotation par ledit corps (2) autour d'un axe de direction (4) sensiblement vertical ;
- au moins un essieu (5) pouvant être relié aux roues (6) dudit véhicule et guidé en rotation autour dudit axe de direction (4) par ledit élément de direction (3) ;
- au moins un dispositif de direction (8) comportant au moins un élément de révolution (9) associé en ne formant qu'une seule pièce avec ledit élément de direction (3) et au moins un élément de poussée (10) placé entre ledit élément de révolution (9) et ledit corps (2) et ajusté de manière coulissante sur ledit élément de révolution lui-même dans une direction sensiblement parallèle audit axe de direction (4), dans laquelle :
- au moins l'un parmi ledit élément de révolution (9) et ledit élément de poussée (10) comprend au moins une rainure (12) comportant une extension sensiblement hélicoïdale et l'autre parmi ledit élément de poussée (10) et ledit élément de révolution (9) comprend au moins une goupille (13) qui est ajustée à l'intérieur de ladite rainure (12), le coulissement dudit élément de poussée (10) par rapport audit élément de révolution (9) provoquant la rotation de ce dernier par l'effet de la venue en prise réciproque de ladite goupille (13) avec ladite rainure (12) ;
- ledit dispositif de direction (8) comprend des moyens de fonctionnement pour faire fonctionner en translation ledit élément de poussée (10), qui sont de type fluido-dynamique ;
ledit corps (2), ledit élément de révolution (9) et ledit élément de poussée (10) délimitent au moins une première et une deuxième chambre de poussée (16a, 16b) disposées sur des côtés opposés par rapport à l'élément de poussée lui-même, lesdits moyens de fonctionnement comprenant au moins une première ligne de distribution/évacuation d'un fluide de travail communiquant avec ladite première chambre de poussée (16a) et au moins une deuxième ligne de distribution/évacuation du fluide de travail communiquant avec ladite deuxième chambre de poussée (16b) ; et
- ledit dispositif de direction (8) comprend des moyens anti-rotation aptes à empêcher ledit élément de poussée (10) de tourner autour dudit axe de direction (4) ;
**caractérisée par le fait que** lesdits moyens anti-rotation comprennent au moins un élément de guidage (15) placé entre ledit corps (2) et ledit élément de révolution (9), ledit élément de guidage (15) passant à travers ledit élément de poussée (10), et **par le fait que** ledit au moins un élément de guidage (15) est sensiblement creux et définit au moins une conduite (18) destinée à l'écoulement dudit fluide de travail communiquant avec l'une desdites chambres de poussée (16a, 16b) et pouvant être reliée à la ligne de distribution/évacuation concernée.

2. Unité de direction (1) selon la revendication 1, **caractérisée par le fait que** ledit élément de révolution (9) est défini en faisant corps avec ledit élément de direction (3) pour former une seule pièce.

3. Unité de direction (1) selon la revendication 1 ou 2, **caractérisée par le fait que** ledit élément de révolution (9) a une section sensiblement ronde et que ledit élément de poussée (10) a une section sensiblement toroïdale, ledit élément de révolution (9) et ledit élément de poussée (10) étant coaxiaux audit axe de direction (4).

4. Unité de direction (1) selon une ou plusieurs des revendications précédentes, **caractérisée par le fait que** ladite au moins une rainure (12) est définie sur ledit élément de révolution (9) et que ladite au moins une goupille (13) est définie sur ledit élément de poussée (10).

5. Unité de direction (1) selon une ou plusieurs des revendications précédentes, **caractérisée par le fait que** ledit dispositif de direction (8) comprend au moins deux desdites rainures (12) et au moins deux desdites goupilles (13), chacune desdites goupilles (13) étant apte à coopérer avec une rainure (12) respective.

6. Unité de direction (1) selon une ou plusieurs des revendications précédentes, **caractérisée par le fait que** ledit élément de guidage (15) est associé audit corps (2) en ne formant qu'une seule pièce avec lui et s'étend de manière sensiblement parallèle audit axe de direction (4).

7. Unité de direction (1) selon une ou plusieurs des revendications précédentes, **caractérisée par le fait que** lesdits moyens anti-rotation comprennent au moins deux desdits éléments de guidage (15) disposés sur des côtés opposés dudit élément de révolution (9).
